# FASCICULE DE BREVET EUROPEEN

(11) **EP 1 230 853 B1**
(45) Date de publication et mention de la délivrance du brevet: **16.04.2008**
(21) Numéro de dépôt: 02360054.7
(22) Date de dépôt: 04.02.2002
(51) Int. Cl.: A01M 7/00

(54) **Châssis d'un pulvérisateur agricole**
Rahmen einer landwirtschaftlichen Feldspritze
Chassis for an agricultural sprayer

(30) Priorité: 07.02.2001 FR 0101613
(43) Date de publication de la demande: 14.08.2002
(73) Titulaire: KUHN S.A., 67700 Saverne (FR)
(72) Inventeur: Guesdon, Alain, 77123 Noisy sur Ecole (FR)
(74) Mandataire: Andres, Jean-Claude

(56) Documents cités:
- FR-A- 2 560 534
- US-A- 3 792 814
- US-A- 4 602 742

## Description

La présente invention se rapporte au domaine technique général du machinisme agricole et plus particulièrement à un pulvérisateur selon la revendication 1.

On connaît un tel pulvérisateur agricole par le document US 4 602 742**.** La structure de liaison destinée à supporter le dispositif d'épandage de ce pulvérisateur comprend deux éléments supports verticaux reliés par deux barres horizontales. Chaque élément support présente un montant inférieur et un montant supérieur.

L'obtention cette structure de liaison est relativement longue et coûteuse. Elle nécessite la réalisation de nombreux éléments (montants inférieur et supérieur, barres horizontales) qui doivent être assemblés avec soin pour le bon fonctionnement du dispositif d'épandage.

Un tel châssis est connu de l'homme du métier. En effet, le document FR 2 520 586 décrit un pulvérisateur agricole dont le châssis est destiné à supporter une cuve de produit phytosanitaire. Pour ce faire, ledit châssis comporte un cadre disposé dans un plan sensiblement horizontal. Ce cadre est réalisé, de manière tout à fait typique, au moyen de deux longerons reliés entre eux par des traverses. Ce châssis connu comporte également deux montants destinés à supporter une rampe de pulvérisation. Lesdits montants, soudés à l'arrière d'un longeron respectif, sont disposés verticalement.

Ce châssis connu présente cependant l'inconvénient d'être relativement long et coûteux à fabriquer. En effet pour obtenir le cadre et la structure de liaison, il faut en premier lieu façonner un nombre relativement important d'éléments (longerons, traverses, montants, ...). Puis un assemblage particulièrement soigné de ces différents éléments est nécessaire afin de garantir un montage aisé dudit dispositif de stockage et dudit dispositif d'épandage sur ledit châssis.

Le but de la présente invention consiste à remédier aux inconvénients de l'état de la technique en proposant un pulvérisateur de conception simplifiée et de fabrication moins coûteuse grâce à la carctéristique de la partie caractérisante de la revendication 1.

La fabrication d'une telle structure de liaison ne nécessite donc plus que la réalisation d'un seul élément. D'où un coût et une durée de fabrication dudit châssis fortement réduit.

Selon une caractéristique supplémentaire de la présente invention, ledit châssis repose au moins partiellement sur le sol au moyen d'un dispositif de liaison au sol. D'une manière préférentielle, ledit dispositif de liaison au sol comporte une suspension destinée à amortir les secousses engendrées par le déplacement dudit pulvérisateur sur un terrain accidenté. A cet effet, ladite suspension comporte un élément actif constitué d'un organe élastiquement déformable et d'un amortisseur. Toujours dans l'optique de réduire le coût de fabrication, ledit élément actif nécessite avantageusement sur ledit châssis qu'un unique point d'ancrage.

Les pulvérisateurs de type traîné comportent une tête d'attelage destinée à lier ledit châssis à un véhicule tracteur. Lors de manoeuvres ledit véhicule tracteur et ledit pulvérisateur s'articulent, d'une manière connue de l'homme de l'art, autour d'un axe vertical passant par ladite tête d'attelage. Un débattement angulaire, autour dudit axe vertical, relativement important est la garantie d'une bonne maniabilité. A cet effet, il est connu dans l'état de la technique de lier ladite tête d'attelage audit châssis au moyen d'une flèche d'attelage. Ladite flèche d'attelage permet avantageusement d'éloigner les éléments relativement larges dudit pulvérisateur (châssis, cuve) de la zone d'évolution, lors dudit pivotement, notamment de la roue arrière dudit véhicule tracteur. Selon une autre caractéristique de la présente invention, ledit dispositif d'attelage comporte avantageusement une tête d'attelage liée directement audit châssis. Le pulvérisateur de la présente invention fait ainsi l'économie de ladite flèche d'attelage.

D'autres caractéristiques de l'invention, à considérer séparément ou dans toutes leurs combinaisons possibles, apparaîtront encore dans la description suivante d'un exemple de réalisation non limitatif de l'invention représenté sur les dessins annexés sur lesquels :
- la **figure 1** représente, en vue de coté, un pulvérisateur agricole conforme à l'invention,
- la **figure 2** représente, en vue de dessus et à une autre échelle, le châssis du pulvérisateur de la figure 1,
- la **figure 3** représente, en vue de coté avec des coupes partielles et à une autre échelle, le châssis de la figure 2.

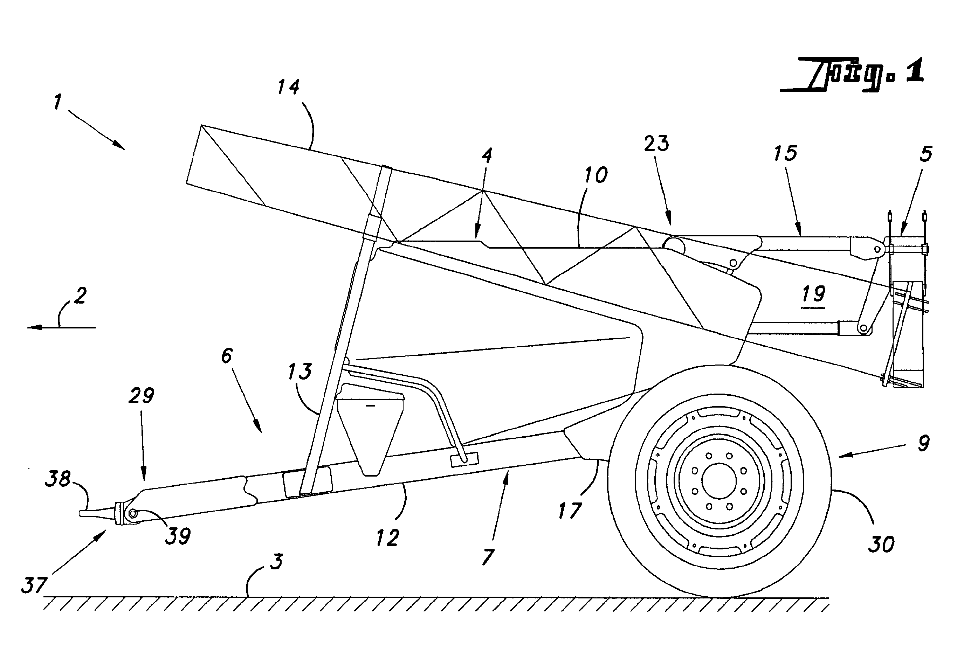

La figure 1 représente, en vue de coté, un pulvérisateur agricole (1) conforme à la présente invention. Lors du travail ou du transport, ledit pulvérisateur (1) est déplacé suivant une direction et un sens d'avance indiqué par la flèche (2). Dans la suite de la description, les notions suivantes "avant" et "arrière", "devant" et "derrière" sont définies par rapport au sens d'avance (2), et les notions "droite" et "gauche" sont définies en regardant ledit pulvérisateur (1) de l'arrière dans le sens d'avance (2).

D'une manière connue de l'homme de l'art, ledit pulvérisateur (1) est utilisé pour épandre un liquide de traitement, par exemple un engrais ou un produit phytosanitaire, sur des plantes et/ou sur le sol (3). A cet effet, ledit pulvérisateur (1) comporte un dispositif de stockage (4) destiné à contenir, entre autres, ledit produit de traitement. Ledit pulvérisateur (1) comporte en sus un dispositif d'épandage (5) destiné à répartir ledit produit de manière sensiblement uniforme sur une largeur de travail. Ledit dispositif de stockage (4) et ledit dispositif d'épandage (5) sont supportés par un châssis (6). Pour ce faire, ledit châssis (6) est constitué respectivement d'une structure porteuse (7) et d'une structure de liaison (8). Dans le cas de pulvérisateurs du type porté, ledit châssis (6) est conçu pour être supporté par l'attelage 3 points d'un véhicule porteur (non représenté). Par contre dans le cas de pulvérisateurs traînés ou automoteurs, ledit châssis (6) repose au moins partiellement sur le sol (3) au moyen d'un dispositif de liaison au sol (9).

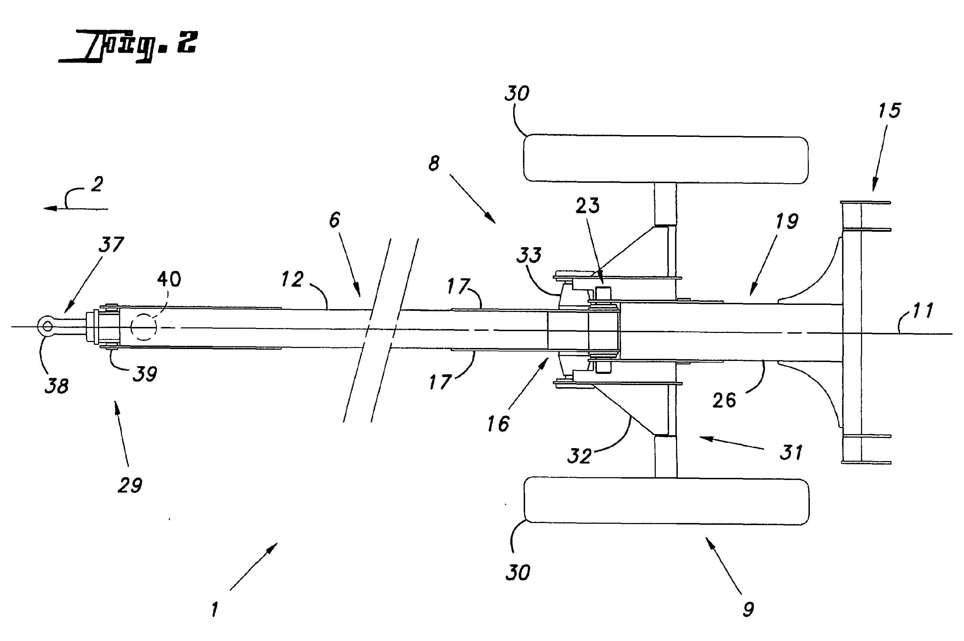

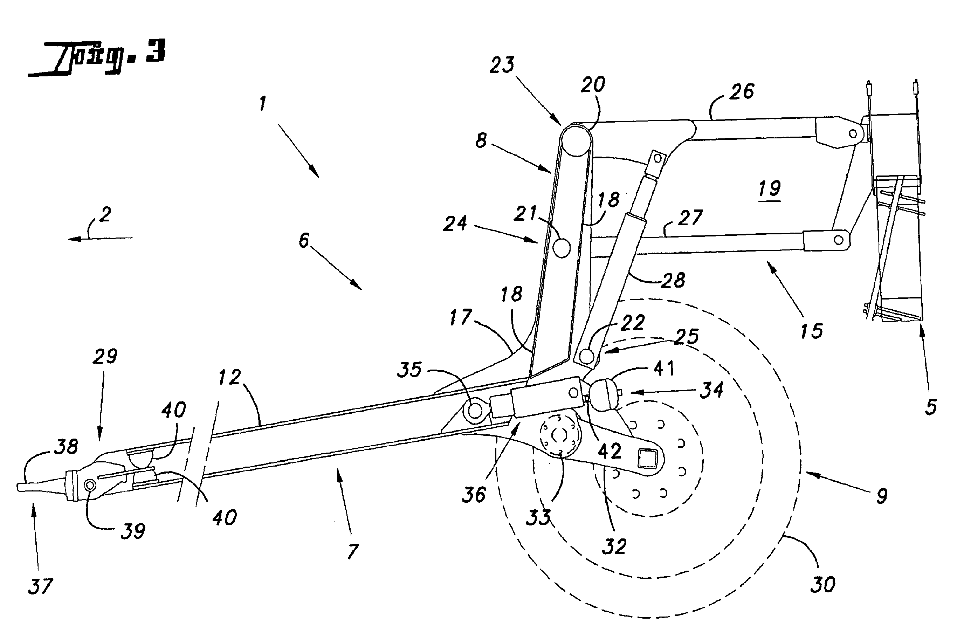

Dans l'exemple de réalisation représenté sur la figure 1, ledit dispositif de stockage (4) comporte une cuve principale (10) destinée à contenir ledit liquide de traitement. Ladite cuve principale (10) est avantageusement disposée de part et d'autre d'un plan vertical médian (11) dudit pulvérisateur (1). Par soucis de clarté, ladite cuve principale (10) n'a pas été représentée sur les figures 2 et 3.

Conformément à une caractéristique importante de la présente invention, ladite cuve (10) est supportée par un unique longeron (12). De manière préférentielle, ledit longeron (12) est disposé sous ladite cuve (10) et au moins sensiblement dans ledit plan vertical médian (11). A la lumière de la figure 3, ledit longeron (12) est avantageusement réalisé au moyen d'un profilé creux sensiblement rectiligne. Ledit profilé, un tube de section carré dans l'exemple représenté, permet d'obtenir une structure porteuse (7) robuste et relative légère tout en étant peu onéreuse à fabriquer.

D'une manière connue de l'homme de l'art, ledit châssis (6) comporte également une superstructure (13) destinée, entre autres, à maintenir ladite cuve (10) sur ledit longeron (12). Selon un autre exemple de réalisation non représenté, ledit dispositif de stockage (4) peut également comporter une ou plusieurs cuves secondaires destinées, par exemple, à contenir un liquide de rinçage. Lesdites cuves secondaires sont supportées soit directement par ledit longeron (12), soit par l'intermédiaire de ladite superstructure (13). Dans tous les cas de figure, ladite superstructure (13) étant liée audit longeron (12), la totalité du poids dudit dispositif de stockage (4) repose sur ledit longeron (12). Etant connue de l'homme du métier et pour des raisons de clarté, ladite superstructure (13) n'a pas été représentée sur les figures 2 et 3.

Pour sa part ledit dispositif d'épandage (5) comporte, dans l'exemple de réalisation visible sur les figures, une rampe (14) supportant une multitude de buses de pulvérisation (non représentées). Lors du travail ladite rampe (14) est déployée, transversalement à ladite direction d'avance (2), de part et d'autre dudit pulvérisateur (1). Lesdites buses sont destinées à pulvériser de manière uniforme ledit liquide de traitement sur les plantes et/ou sur le sol (3). Lors du transport, comme représenté sur la figure 1, ladite rampe (14) est avantageusement repliée afin de réduire l'encombrement dudit pulvérisateur (1). De manière préférentielle, ladite rampe (14) repose, lors du transport, au moins partiellement sur ladite superstructure (13). Ladite rampe (14) étant connue en soi, elle n'a été représentée que sur la figure 1 et de manière symbolique.

D'une manière connue de l'homme de l'art, ledit dispositif d'épandage (5) comporte également un organe de liaison (15) destiné à lier ladite rampe (14) audit châssis (6). Lors du travail, ledit organe de liaison (15) doit notamment maintenir ladite rampe (14) parallèle audit sol (3). Avantageusement, ledit organe de liaison (15) permet en sus de modifier, en fonction par exemple de la taille des plantes à traiter, la distance séparant lesdites buses de pulvérisation dudit sol (3). Dans l'exemple de réalisation représenté sur les figures, cette modification de la hauteur de pulvérisation est réalisée au moyen d'un système à parallélogramme déformable.

Conformément à une autre caractéristique de la présente invention, ledit organe de liaison (15) est lié à un montant unique (16) dudit châssis (6). De manière préférentielle, ledit montant (16) est situé au moins sensiblement dans ledit plan vertical médian (11) et à l'arrière dudit pulvérisateur (1). A la lumière de la figure 3 représentant une vue en coupe dudit châssis (6), ledit montant (16) est réalisé au moyen de deux plaques latérales (17), sensiblement verticales, reliées par deux tôles de fermeture (18). Ledit montant (16) a ainsi une structure en caisson parfaitement adaptée pour supporter les sollicitations engendrées par ledit dispositif d'épandage (5).

Dans l'exemple de réalisation représenté sur les figures, ledit système à parallélogramme comporte avantageusement un unique parallélogramme (19). A la lumière de la figure 3, ledit montant (16) comporte trois ouvertures (20, 21, 22) définissant l'axe respectif de trois articulations (23, 24, 25). Lesdites articulations (23, 24) permettent de lier respectivement un bras supérieur (26) et un bras inférieur (27) dudit parallélogramme (19) audit montant (16). Pour sa part, ladite articulation (25) permet de lier un vérin (28) audit montant (16). D'une manière connue de l'homme de l'art, ledit vérin (28) est destiné à déformer ledit parallélogramme (19) et ainsi déplacer ladite rampe (14) suivant une direction sensiblement verticale.

Dans l'exemple de réalisation représenté sur les figures, ledit pulvérisateur (1) est de type traîné. Ledit châssis (6) repose donc au moins partiellement sur le sol (3) au moyen dudit dispositif de liaison au sol (9). De plus, ledit châssis (6) est lié à un véhicule tracteur (non représenté) au moyen d'un dispositif d'attelage (29).

D'une manière connue de l'homme de l'art, ledit dispositif de liaison au sol (9) comporte au moins deux roues (30) disposées de part et d'autre dudit plan vertical médian (11). D'une manière particulièrement avantageuse lesdites roues (30) sont liées audit châssis (6) au moyen d'une suspension (31) permettant d'amortir les secousses engendrées par le déplacement dudit pulvérisateur (1) sur un terrain accidenté.

Dans l'exemple de réalisation représenté sur les figures, ladite suspension (31) comporte un bras tiré (32) lié audit châssis (6) au moyen d'une articulation (33) d'axe au moins sensiblement horizontale et perpendiculaire à ladite direction d'avance (2). Ladite articulation (33) est avantageusement disposée dans ledit plan vertical médian (11). D'une manière préférentielle, ledit bras tiré (32) est lié auxdites plaques latérales (17). A la lumière notamment de la figure 3, ladite suspension (31) comporte également un élément actif (34) permettant d'amortir le pivotement dudit bras tiré (32) par rapport audit châssis (6) autour de ladite articulation (33). D'une manière connue de l'homme de l'art, ledit élément actif (34) est constitué d'un organe élastiquement déformable et d'un amortisseur.

Selon une autre caractéristique de la présente invention, ledit élément actif (34) nécessite qu'un unique point d'ancrage (35) sur ledit châssis (6).

En effet dans l'exemple de réalisation représenté plus particulièrement sur la figure 3, ledit élément actif (34) est réalisée au moyen d'un unique vérin oléopneumatique (36) lié d'une part audit châssis (6) et d'autre part audit bras tiré (32). D'une manière particulièrement avantageuse, ledit point d'ancrage (35) dudit vérin oléopneumatique (36) sur ledit châssis (6) est situé à l'intérieur dudit longeron (12). Ledit vérin oléopneumatique (36) comporte un accumulateur d'énergie réglable (41) et un étranglement réglable (42). Ainsi la raideur et l'amortissement de ladite suspension (31) peuvent être facilement adaptées au poids dudit pulvérisateur (1). Ledit vérin oléopneumatique (36) étant connu en soi, il ne sera pas décrit davantage.

Pour sa part et d'une manière connue de l'homme de l'art, ledit dispositif d'attelage (29) comporte une tête d'attelage (37). Dans l'exemple de réalisation représenté sur les figures, ladite tête d'attelage (37) est réalisée au moyen d'un anneau (38) destiné à s'engager dans un crochet (non représenté) dudit véhicule tracteur.

Conformément à une autre caractéristique de la présente invention, ladite tête d'attelage (37) est liée directement audit châssis (6) et plus précisément audit longeron (12).

Etant relativement étroit et disposé dans ledit plan vertical médian (11), ledit longeron (12) remplit ainsi également la fonction dédiée aux flèches d'attelage de l'art antérieur, à savoir permettre un débattement angulaire relativement important entre ledit véhicule tracteur et ledit pulvérisateur (1). De manière préférentielle, ladite tête d'attelage (37) est liée audit longeron (12) au moyen d'une articulation (39) d'axe sensiblement horizontal et perpendiculaire à ladite direction d'avance (2). Avantageusement, le pivotement de ladite tête d'attelage (37) par rapport audit longeron (12) autour de ladite articulation (39) est amorti au moyen d'éléments amortisseurs (40). Lesdits éléments amortisseurs (40) sont avantageusement disposés à l'intérieur dudit longeron (12).

Le châssis (6) et le pulvérisateur agricole (1) qui viennent d'être décrits, ne sont qu'un exemple de réalisation et d'utilisation qui ne saurait en aucun cas limiter le domaine de protection défini par les revendications suivantes.

Ainsi, le mécanisme permettant de rapprocher ou d'éloigner ladite rampe (14) dudit sol (6) peut également être réalisé au moyen d'une liaison glissière d'axe sensiblement verticale.

De plus, ladite tête d'attelage (37) peut être de conception totalement différente que celle représentée. En effet, celle-ci peut être réalisée au moyen d'un berceau destiné à être lié aux bras inférieurs (non représentés) d'un attelage 3 points dudit véhicule tracteur.

## Revendications

1. Pulvérisateur agricole (1) muni d'un châssis (6) comportant :
- une structure porteuse (7), constituée d'un unique longeron (12), destinée à supporter un dispositif de stockage (4), et
- une structure de liaison (8) destinée à supporter un dispositif d'épandage (5),
***caractérisé par le fait que*** ladite structure de liaison (8) est constituée d'un unique montant (16).

2. Pulvérisateur agricole selon la revendication 1, ***caractérisé par le fait que*** ledit longeron (12) est disposé au moins sensiblement suivant un plan vertical médian (11) dudit pulvérisateur (1).

3. Pulvérisateur agricole selon la revendication 1 ou 2, ***caractérisé par le fait que*** ledit longeron (12) est sensiblement rectiligne.

4. Pulvérisateur agricole selon l'une quelconque des revendications 1 à 3, ***caractérisé par le fait que*** ledit longeron (12) est réalisé au moyen d'un profilé creux.

5. Pulvérisateur agricole selon l'une quelconque des revendications 1 à 4, ***caractérisé par le fait que*** ledit montant (16) est disposé au moins sensiblement suivant un plan vertical médian (11) dudit pulvérisateur (1).

6. Pulvérisateur agricole selon l'une quelconque des revendications 1 à 5, ***caractérisé par le fait que*** ledit montant (16) est dirigé suivant une direction au moins sensiblement verticale.

7. Pulvérisateur agricole selon l'une quelconque des revendications 1 à 6, ***caractérisé par le fait que*** ledit montant (16) est lié à un système à parallélogramme (19) dudit dispositif d'épandage (5).

8. Pulvérisateur agricole selon l'une quelconque des revendications 1 à 7, ***caractérisé par le fait que*** ledit châssis (6) repose au moins partiellement sur le sol (3) au moyen d'un dispositif de liaison au sol (9).

9. Pulvérisateur agricole selon la revendication 8, ***caractérisé par le fait que*** ledit dispositif de liaison au sol (9) comporte un bras tiré (32) lié audit châssis (6) au moyen d'une articulation (33).

10. Pulvérisateur agricole selon la revendication 9, ***caractérisé par le fait que*** ladite articulation (33) est disposée au moins sensiblement dans un plan vertical médian (11) dudit pulvérisateur (1).

11. Pulvérisateur agricole selon l'une des revendications 8 à 10, ***caractérisé par le fait que*** ledit dispositif de liaison au sol (9) comporte un élément actif (34) nécessitant qu'un unique point d'ancrage (35) sur ledit châssis (6).

12. Pulvérisateur agricole selon la revendication 11, ***caractérisé par le fait que*** ledit point d'ancrage (35) est situé à l'intérieur dudit longeron (12).

13. Pulvérisateur agricole selon la revendication 11 ou 12, ***caractérisé par le fait que*** ledit élément actif (34) est un vérin oléopneumatique (36).

14. Pulvérisateur agricole selon la revendication 13, ***caractérisé par le fait que*** ledit vérin oléopneumatique (36) est disposé au moins sensiblement dans un plan vertical médian (11) dudit pulvérisateur (1).

15. Pulvérisateur agricole selon l'une quelconque des revendications 1 à 14, ***caractérisé par le fait que*** ledit châssis (6) est lié à un véhicule tracteur au moyen d'un dispositif d'attelage (29) comportant une tête d'attelage (37).

16. Pulvérisateur agricole selon la revendication 15, ***caractérisé par le fait que*** ladite tête d'attelage (37) est liée directement audit longeron (12).

17. Pulvérisateur agricole selon la revendication 16, ***caractérisé par le fait que*** ladite tête d'attelage (37) est liée audit longeron (12) au moyen d'une articulation (39).

18. Pulvérisateur agricole selon la revendication 17, ***caractérisé par le fait que*** le pivotement de ladite tête d'attelage (37) par rapport audit longeron (12) autour de ladite articulation (39) est amortie au moyen d'éléments amortisseurs (40).

19. Pulvérisateur agricole selon la revendication 18, ***caractérisé par le fait que*** lesdits éléments amortisseurs (40) sont disposés à l'intérieur dudit longeron (12).

## Claims

1. Agricultural sprayer (1) equipped with a chassis (6), the said chassis (6) comprising:
- a bearing structure (7) comprising a single stringer (12), intended to support a storage device (4), and
- a connecting structure (8) intended to support a spreading device (5),
***characterized in* that** the said connecting structure (8) comprises a single upright (16).

2. Agricultural sprayer according to claim 1, ***characterized in* that** the said stringer (12) is arranged at least substantially in a vertical mid-plane (11) of the said sprayer (1).

3. Agricultural sprayer according to claim 1 or 2, ***characterized in* that** the said stringer (12) is substantially straight.

4. Agricultural sprayer according to anyone of claims 1 to 3, ***characterized in* that** the said stringer (12) is made using a hollow section piece.

5. Agricultural sprayer according to anyone of claims 1 to 4, ***characterized in* that** the said upright (16) is arranged at least substantially in a vertical mid-plane (11) of the said sprayer (1).

6. Agricultural sprayer according to anyone of claims 1 to 5, ***characterized in* that** the said upright (16) is directed in an at least substantially vertical direction.

7. Agricultural sprayer according to anyone of claims 1 to 6, ***characterized in* that** the said upright (16) is connected to a system with a parallelogram (19) of the said spreading device (5).

8. Agricultural sprayer according to anyone of claims 1 to 7, ***characterized in* that** the said chassis (6) rests at least partially on the ground (3) by a ground-connection device (9).

9. Agricultural sprayer according to claim 8, ***characterized in* that** the said ground-connection device (9) comprises a trailed arm (32) connected to the said chassis (6) by an articulation (33).

10. Agricultural sprayer according to claim 9, ***characterized in* that** the said articulation (33) is arranged at least substantially in a vertical mid-plane (11) of the said sprayer (1).

11. Agricultural sprayer according to one of claims 8 to 10, ***characterized in* that** the said ground-connection device (9) comprises an active element (34) entailing just one anchoring point (35) on the said chassis (6).

12. Agricultural sprayer according to claim 11, ***characterized in* that** the said anchoring point (35) lies inside the said stringer (12).

13. Agricultural sprayer according to claim 11 or 12, ***characterized in* that** the said active element (34) is an oleopneumatic ram (36).

14. Agricultural sprayer according to claim 13, ***characterized in* that** the said oleopneumatic ram (36) is arranged at least substantially in a vertical mid-plane (11) of the said sprayer (1).

15. Agricultural sprayer according to anyone of claims 1 to 14, ***characterized in* that** the said chassis (6) is connected to a tractor vehicle by means of a hitching device (29) comprising a hitching head (37).

16. Agricultural sprayer according to claim 15, ***characterized in* that** the said hitching head (37) is connected directly to the said stringer (12).

17. Agricultural sprayer according to claim 16, ***characterized in* that** the said hitching head (37) is connected to the said stringer (12) by means of an articulation (39).

18. Agricultural sprayer according to claim 17, ***characterized in* that** a pivoting of the said hitching head (37) with respect to the said stringer (12) about the said articulation (39) is damped using damping elements (40).

19. Agricultural sprayer according to claim 18, ***characterized in* that** the said damping elements (40) are arranged inside the said stringer (12).

## Patentansprüche

1. Landwirtschaftliche Feldspritze (1), die mit einem Rahmen (6) versehen ist, der:
- eine Tragstruktur (7), die von einem einzigen Längsträger (12) gebildet ist, der dazu bestimmt ist, eine Speicherungsvorrichtung (4) zu tragen, und
- eine Verbindungsstruktur (8), die dazu bestimmt ist, eine Verteilvorrichtung (5) zu tragen,
umfasst, ***dadurch gekennzeichnet,* dass** die Verbindungsstruktur (8) von einem einzigen Ständer (16) gebildet ist.

2. Landwirtschaftliche Feldspritze nach Anspruch 1, ***dadurch gekennzeichnet,* dass** der Längsträger (12) mindestens im Wesentlichen entlang einer mittleren Vertikalebene (11) der Feldspritze (1) angeordnet ist.

3. Landwirtschaftliche Feldspritze nach Anspruch 1 oder 2, ***dadurch gekennzeichnet,* dass** der Längsträger (12) im Wesentlichen gerade ist.

4. Landwirtschaftliche Feldspritze nach irgend einem der Ansprüche 1 bis 3, ***dadurch gekennzeichnet,* dass** der Längsträger (12) mittels eines Hohlprofils ausgeführt ist.

5. Landwirtschaftliche Feldspritze nach irgend einem der Ansprüche 1 bis 4, ***dadurch gekennzeichnet,* dass** der Ständer (16) mindestens im Wesentlichen entlang einer mittleren Vertikalebene (11) der Feldspritze (1) angeordnet ist.

6. Landwirtschaftliche Feldspritze nach irgend einem der Ansprüche 1 bis 5, ***dadurch gekennzeichnet,* dass** der Ständer (16) in eine im Wesentlichen vertikale Richtung ausgerichtet ist.

7. Landwirtschaftliche Feldspritze nach irgend einem der Ansprüche 1 bis 6, ***dadurch gekennzeichnet,* dass** der Ständer (16) mit einem System mit Parallelogramm (19) der Streuvorrichtung (5) verbunden ist.

8. Landwirtschaftliche Feldspritze nach irgend einem der Ansprüche 1 bis 7, ***dadurch gekennzeichnet,* dass** der Rahmen (6) mindestens teilweise auf dem Boden (3) mittels einer Vorrichtung zur Verbindung mit dem Boden (9) aufliegt.

9. Landwirtschaftliche Feldspritze nach Anspruch 8, ***dadurch gekennzeichnet,* dass** die Vorrichtung zur Verbindung mit dem Boden (9) einen gezogenen Arm (32) umfasst, der mit dem Rahmen (6) mittels eines Gelenks (33) verbunden ist.

10. Landwirtschaftliche Feldspritze nach Anspruch 9, ***dadurch gekennzeichnet,* dass** das Gelenk (33) mindestens im Wesentlichen in einer mittleren Vertikalebene (11) der Feldspritze angeordnet ist.

11. Landwirtschaftliche Feldspritze nach irgend einem der Ansprüche 8 bis 10, ***dadurch gekennzeichnet,* dass** die Vorrichtung zur Verbindung mit dem Boden (9) ein aktives Element (34) umfasst, das nur einen einzigen Verankerungspunkt (35) auf dem Rahmen (6) benötigt.

12. Landwirtschaftliche Feldspritze nach Anspruch 11, ***dadurch gekennzeichnet,* dass** der Verankerungspunkt (35) innerhalb des Längsträgers (12) vorgesehen ist.

13. Landwirtschaftliche Feldspritze nach Anspruch 11 oder 12, ***dadurch gekennzeichnet,* dass** das aktive Element (34) ein Öl-Druckluft-Zylinder (36) ist.

14. Landwirtschaftliche Feldspritze nach Anspruch 13, ***dadurch gekennzeichnet,* dass** der Öl-Druckluft-Zylinder (36) mindestens im Wesentlichen in einer mittleren Vertikalebene (11) der Feldspritze (1) angeordnet ist.

15. Landwirtschaftliche Feldspritze nach irgend einem der Ansprüche 1 bis 14, ***dadurch gekennzeichnet,* dass** der Rahmen (6) mit einem Zugfahrzeug mittels einer Kupplungsvorrichtung (29), die einen Kupplungskopf (37) umfasst, verbunden ist.

16. Landwirtschaftliche Feldspritze nach Anspruch 15, ***dadurch gekennzeichnet,* dass** der Kupplungskopf (37) direkt mit dem Längsträger (12) verbunden ist.

17. Landwirtschaftliche Feldspritze nach Anspruch 16, ***dadurch gekennzeichnet,* dass** der Kupplungskopf (37) mit dem Längsträger (12) mittels eines Gelenks (39) verbunden ist.

18. Landwirtschaftliche Feldspritze nach Anspruch 17, ***dadurch gekennzeichnet,* dass** das Schwenken des Kupplungskopfes (37) in Bezug zum Längsträger (12) um das Gelenk (39) mittels von Dämpfungselementen (40) gedämpft wird.

19. Landwirtschaftliche Feldsprite nach Anspruch 18, ***dadurch gekennzeichnet,* dass** die Dämpfungselemente (40) im Inneren des Längsträgers (12) angeordnet sind.
